# EUROPÄISCHE PATENTSCHRIFT

(11) **EP 4 094 001 B1**
(45) Veröffentlichungstag und Bekanntmachung des Hinweises auf die Patenterteilung: **08.10.2025**
(21) Anmeldenummer: 21700405.0
(22) Anmeldetag: 11.01.2021
(51) Int. Cl.: F16K 15/04, F16K 31/06, F16K 15/18, F16K 17/168, F16D 48/02

(54) **VENTILEINRICHTUNG EINER PNEUMATISCH BETÄTIGBAREN REIBUNGSKUPPLUNG**
VALVE DEVICE OF A PNEUMATICALLY ACTUATABLE FRICTION CLUTCH
DISPOSITIF DE SOUPAPE D'UN EMBRAYAGE À FRICTION À ACTIONNEMENT PNEUMATIQUE

(30) Priorität: 23.01.2020 DE 102020101512
(43) Veröffentlichungstag der Anmeldung: 30.11.2022
(73) Patentinhaber: ZF CV Systems Europe BV, 1170 Brüssel (BE)
(72) Erfinder: DIDWISZUS, Lars, 31157 Sarstedt (DE); KARSTENS, Hauke, 24111 Kiel (DE); GÜNTHER, Michael, 30974 Wennigsen (DE)
(74) Vertreter: Ohlendorf, Henrike
(86) Internationale Anmeldenummer: PCT/EP2021/050355
(87) Internationale Veröffentlichungsnummer: WO 2021/148263

(56) Entgegenhaltungen:
- EP-A1- 0 726 855
- EP-A1- 3 374 675
- EP-A2- 0 255 982
- DE-A1- 102010 038 506
- DE-C- 949 867
- GB-A- 606 229
- JP-A- S59 180 128
- US-A- 2 648 311

## Beschreibung

Die Erfindung betrifft eine Ventileinrichtung einer pneumatisch betätigbaren Reibungskupplung, die in einem Fahrzeug zwischen einem Antriebsmotor und einem Schaltgetriebe angeordnet sowie mittels Federkraft einrückbar ist, mit mindestens einem eingangsseitig an eine druckführende Vorratsleitung und ausgangsseitig an einen Arbeitsraum eines Stellzylinders der Reibungskupplung angeschlossenen, als ein 2/2-Wege-Magnetsitzventil ausgebildeten Einlassventil, einem eingangsseitig an den Arbeitsraum des Stellzylinders und ausgangsseitig an einen Entlüftungsausgang angeschlossenen, als ein 2/2-Wege-Magnetsitzventil ausgebildeten Auslassventil, sowie einem dem Einlassventil vorgeordnetes oder nachgeordnetes, als ein in Rückströmrichtung schließendes Rückschlagventil ausgebildeten Druckhalteventil.

Bei einer pneumatisch ausrückbaren und einrückbaren Reibungskupplung wird durch das Öffnen eines Einlassventils der zugeordnete Stellzylinder aus der Vorratsleitung belüftet, wodurch die Reibungskupplung gegen die Rückstellkraft einer Schließ- oder Anpressfeder ausgerückt wird. Durch das Öffnen eines Auslassventils wird der Stellzylinder entlüftet, wodurch die Reibungskupplung unter der Wirkung einer Schließ- oder Anpressfeder wieder eingerückt wird. Ein Druckhalteventil hat bei belüftetem Stellzylinder und geschlossenem Einlassventil die Funktion, den Arbeitsdruck in dem Stellzylinder zumindest über einen gewissen Zeitraum zu halten, wenn der in der Vorratsleitung anliegende Versorgungsdruck, zum Beispiel aufgrund eines Defektes in der Druckluftversorgungseinrichtung, eines Leitungsbruchs oder einer größeren Entnahme von Druckluft durch einen anderen Verbraucher, absinkt. Aufgrund der hier vorgesehenen Bauweise als Sitzventil ist das Einlassventil nicht in der Lage, im geschlossenen Zustand den im Stellzylinder eingeschlossenen Arbeitsdruck zu halten, weil das als Membran oder Kolben ausgebildete Schaltelement bei negativem Druckgradienten, also höherem Druck in dem Arbeitsraum des Stellzylinders als in der Vorratsleitung, von dem Ventilsitz weggedrückt wird.

EP 3374675A1 offenbart ein Rückschlagventil, umfassend einen Ventilkörper, umfassend: einen ersten Abschnitt; einen zweiten Abschnitt; und eine Öffnung, durch die der erste und der zweite Abschnitt in Flüssigkeit Kommunikation untereinander sind; und einen Sitz an der Öffnung.

DE102010038506A1 offenbart eine Ventilanordnung, insbesondere für schlupfgeregelte Kraftfahrzeug-Bremsanlagen.

JPS59180128A offenbart eine Ventilanordnung mit den Merkmalen des Oberbegriffs von Anspruch 1.

EP0255982 A2 offenbart ein einstellbare Kugelrückschlagventil zur Verwendung in Rohrleitungen.

GB606229A offenbart die Ventilkugeln für Rückschlagventile und von der Art, die einen harten kugelförmigen Kern aufweisen, der mit einer Schicht aus Hartgummi oder einem anderen elastischen Material beschichtet ist.

US2648311A bezieht sich allgemein auf einen Ventilmechanismus und insbesondere auf einen kraftbetätigten und manuell betätigten Dreiwegeventilmechanismus, der zur Verwendung als Steuereinrichtung in einem Mechanismus zum Steuern des Betriebs der Reibungskupplung eines Kraftfahrzeugs geeignet ist.

In der DE 10 2011 075 168 A1, die ein Verfahren zur Erkennung einer Leckage in der Stellvorrichtung einer pneumatisch betätigbaren Reibungskupplung beschreibt, ist ein Schaltschema mit einer Ventileinrichtung einer pneumatisch betätigbaren Reibungskupplung beschrieben, bei der einem Einlassventil für den Stellzylinder der Reibungskupplung ein in Rückströmrichtung schließendes Rückschlagventil vorgeschaltet ist. Durch das Rückschlagventil soll bei einem störungsbedingten Abfall des Versorgungsdruckes in der Vorratsleitung eine Entlüftung des Stellzylinders und damit ein unbeabsichtigtes Einrücken der Reibungskupplung verhindert werden.

In Hinblick auf ein unbeabsichtigtes Einrücken der Reibungskupplung ist insbesondere eine Anfahrsituation als kritisch anzusehen, bei welcher der Antriebsmotor läuft, die Reibungskupplung ausgerückt ist und ein Anfahrgang eingelegt ist, da dann das durch eine plötzliche Entlüftung des Stellzylinders bewirkte Einrücken der Reibungskupplung zu einem sprunghaften Anfahren des Fahrzeugs führen würde. Wenn der in dem Arbeitsraum des Stellzylinders anliegende Luftdruck jedoch durch das Druckhalteventil zumindest über einen gewissen Zeitraum weitgehend konstant gehalten wird, der ausreicht, den Anfahrgang auszulegen und/oder den Antriebsmotor abzustellen, kann ein derartiges unkontrolliertes Anfahren des Fahrzeugs verhindert werden.

Bislang ist das Druckhalteventil als ein konventionelles Rückschlagventil ausgebildet, bei dem ein zumeist kugelförmiger Schließkörper von einer Ventilfeder in Schließrichtung gegen einen Ventilsitz gedrückt wird. Ein derartiges Rückschlagventil besteht aus Präzisionsteilen und ist daher relativ aufwendig und teuer herstellbar. Bei jeder Belüftung des Stellzylinders beziehungsweise bei jedem Ausrücken der Reibungskupplung wird der Schließkörper von einem wirksamen positiven pneumatischen Druckgradienten gegen die Rückstellkraft der Ventilfeder entgegen der Schließrichtung von dem Ventilsitz weggedrückt und damit das Rückschlagventil geöffnet. Bei der Entlüftung des Stellzylinders über das Auslassventil wird der Schließkörper unter der Wirkung der Ventilfeder wieder gegen den Ventilsitz gedrückt, wobei er an dem Ventilsitz anschlägt. Da das Ausrücken und Einrücken der Reibungskupplung im Verlauf der Lebensdauer eines Fahrzeugs mehrere Millionen mal erfolgt, unterliegt ein als konventionelles Rückschlagventil ausgeführtes Druckhalteventil einem hohen Verschleiß und kann daher irgendwann seine Funktion verlieren. Zudem haben durchgeführte Untersuchungen ergeben, dass ein störungsbedingter Druckabfall in der Vorratsleitung, für den der Einbau des Druckhalteventils eigentlich vorgesehen ist, relativ selten auftritt und im Verlauf der Lebensdauer eines Fahrzeugs weniger als zehnmal vorkommt.

Der vorliegenden Erfindung liegt daher die Aufgabe zugrunde, eine Ventileinrichtung einer pneumatisch betätigbaren Reibungskupplung der eingangs genannten Art mit einem dem Einlassventil vorgeordneten oder nachgeordneten Druckhalteventil vorzustellen, welches einfach aufgebaut, kostengünstig herstellbar sowie verschleißarm betreibbar ist.

Diese Aufgabe ist durch eine Ventileinrichtung mit den Merkmalen des Anspruchs 1 gelöst. Vorteilhafte Ausgestaltungen und Weiterbildungen sind in den abhängigen Ansprüchen definiert.

Demnach geht die Erfindung aus von einer Ventileinrichtung für eine pneumatisch betätigbaren Reibungskupplung, die in einem Fahrzeug zwischen einem Antriebsmotor und einem Schaltgetriebe angeordnet sowie mittels Federkraft einrückbar ist, wobei die Ventileinrichtung mindestens ein eingangsseitig an eine druckführende Vorratsleitung und ausgangsseitig an einen Arbeitsraum eines Stellzylinders der Reibungskupplung anschließbares, als ein 2/2-Wege-Magnetsitzventil ausgebildetes Einlassventil, ein eingangsseitig an den Arbeitsraum des Stellzylinders und ausgangsseitig an einen Entlüftungsausgang anschließbares, als ein 2/2-Wege-Magnetsitzventil ausgebildeten Auslassventil, sowie ein dem Einlassventil vorgeordnetes oder nachgeordnetes, als ein in Rückströmrichtung schließendes Rückschlagventil ausgebildetes Druckhalteventil aufweist.

Zur Lösung der gestellten Aufgabe ist bei dieser Ventileinrichtung vorgesehen, dass das Druckhalteventil als ein ventilfederloses Rückschlagventil ausgebildet ist und einen Gehäusering mit einem Haltekorb, einen Schließkörper sowie einen Ventilsitz aufweist, wobei der Schließkörper des Druckhalteventils im drucklosen Zustand sowie bei positivem Druckgradienten aus Richtung der Austrittsbohrung des zugeordneten Einlassventils formschlüssig und kraftschlüssig in dem Haltekorb des Gehäuserings haltbar sowie bei negativem Druckgradienten in Richtung der Austrittsbohrung des zugeordneten Einlassventils aus dem Haltekorb heraus hebbar und gegen den Ventilsitz drückbar ist.

Durch die Ausbildung des Druckhalteventils als ein ventilfederloses Rückschlagventil, bei dem der Schließkörper im drucklosen Zustand und bei positivem Druckgradienten form- und kraftschlüssig in dem Haltekorb des Gehäuserings gehalten und bei negativem Druckgradienten aus dem Haltekorb herausgehoben sowie gegen den Ventilsitz gedrückt wird, ist das erfindungsgemäße Druckhalteventil insbesondere mit einem weichen Schließkörper weitgehend verschleißfrei. Der Schließkörper wird nur in dem relativ selten auftretenden Störungsfall, in welchem der Versorgungsdruck in der Vorratsleitung bei belüftetem Stellzylinder und somit ausgerückter Reibungskupplung plötzlich abfällt, aus dem Haltekorb des Gehäuserings gedrückt und das Druckhalteventil geschlossen. Dadurch wird der in dem Arbeitsraum des Stellzylinders eingeschlossene Luftdruck zumindest so lange dort gehalten, bis der Antriebsmotor abgestellt ist. Dagegen verbleibt der Schließkörper im Normalbetrieb der Reibungskupplung und des betreffenden Druckluftkreises in dem Haltekorb des Gehäuserings und wird, anders als bei einem konventionellen Rückschlagventil, beim Aus- und Einrücken der Reibungskupplung nicht bewegt. Daher kann das erfindungsgemäße Druckhalteventil auch durch einfache Formgebung und die Verwendung günstiger Materialien mit geringem Fertigungsaufwand kostengünstig hergestellt werden. Zudem ist festzustellen, dass die vorgestellte Ventilanordnung im Vergleich zu einem konventionellen Rückschlagventil bauraumbezogen sehr kompakt ist.

Bei einer bevorzugten Weiterbildung der Ventileinrichtung ist vorgesehen, dass der Haltekorb des Gehäuserings aus radial innen am Gehäusering ausgebildeten, umfangsseitig verteilt angeordneten Haltestege besteht, und dass diese Haltestege jeweils eine kreissegmentförmige Innenfläche aufweisen, welche gemeinsam eine kugelsegmentförmige Haltegeometrie des Haltekorbs bilden. Zwischen den Haltestegen befinden sich dadurch umfangsseitig ausreichend große Aussparungen für die Durchströmung von Druckluft im geöffneten Zustand des jeweiligen Druckhalteventils.

Um eine aufwendige mechanische Feinbearbeitung des Haltekorbs beziehungsweise der Haltestege und des Ventilsitzes zu vermeiden, weist der Schließkörper vorteilhaft eine federelastische Oberfläche auf. Durch diese elastische Oberfläche passt sich der Schließkörper sowohl im geöffneten Zustand des Druckhalteventils an die Kontur des Haltekorbs beziehungsweise der Haltestege als auch im geschlossenen Zustand des Druckhalteventils an die Kontur des Ventilsitzes an. Diese Geometrieanpassung des Schließkörpers ist vergleichsweise gering und reversibel, wodurch sichergestellt ist, dass der Schließkörper wechselweise sowohl im Haltekorb nicht festklemmt als auch an dem Ventilsitz des Einlassventils abdichtend anliegt. Zudem wird durch die elastische Oberfläche des Schließkörpers ein mechanischer Verschleiß an dem Haltekorb beziehungsweise dessen Haltestegen und am Ventilsitz verhindert.

Zur Realisierung der federelastischen Oberfläche des Schließkörpers kann dieser vollständig aus einem federelastischen Material hergestellt sein. Alternativ dazu kann der Schließkörper jedoch auch einen Kern aus einem harten Material aufweisen, der mit einem federelastischen Material beschichtet ist. Der Schließkörper kann aber auch einen zentrischen Hohlraum aufweisen, welcher kugelschalenförmig von dem federelastischen Material umgeben ist. Hierdurch weist der Schließkörper ein besonders geringes Gewicht auf. Bei dem federelastischen Material des Schließkörpers handelt es sich bevorzugt um Gummi oder um Silikonkautschuk.

Da die Schließkraft des Schließkörpers am Einlassventil von dem Strömungswiderstand und der Masse des Schließkörpers abhängt, ist der Strömungswiderstand des Schließkörpers möglichst groß und seine Masse möglichst gering.

Gemäß der erfindungsgemäßen Ventilanordnung ist vorgesehen, dass das Druckhalteventil dem Einlassventil nachgeschaltet sowie nahe an der Austrittsbohrung des Einlassventils angeordnet ist, und dass der Rand der Austrittsbohrung des Einlassventils als Ventilsitz des Druckhalteventils dient und/oder ausgebildet ist. Hierdurch entfällt ein ventilseitiger, also ein als Bestandteil zum Beispiel des Gehäuserings ausgeführter Ventilsitz kostengünstig und bauraumsparend.

Die Erfindung wird nachstehend anhand eines in der beigefügten Zeichnung dargestellten Ausführungsbeispiels näher erläutert. In der Zeichnung zeigt
Fig. 1 ein Steuermodul einer erfindungsgemäßen Ventileinrichtung einer pneumatisch betätigbaren Reibungskupplung mit zwei Einlassventilen und zwei Druckhalteventilen in einer ausschnittsweisen perspektivischen Schnittansicht,
Fig. 2 ein Gehäusering und ein Schließkörper eines Druckhalteventils gemäß Fig. 1 in einer perspektivischen Schnittansicht beziehungsweise Seitenansicht, und
Fig. 3 zeitliche Verläufe eines Versorgungsdruckes und eines Kupplungsdruckes in einem Diagramm.

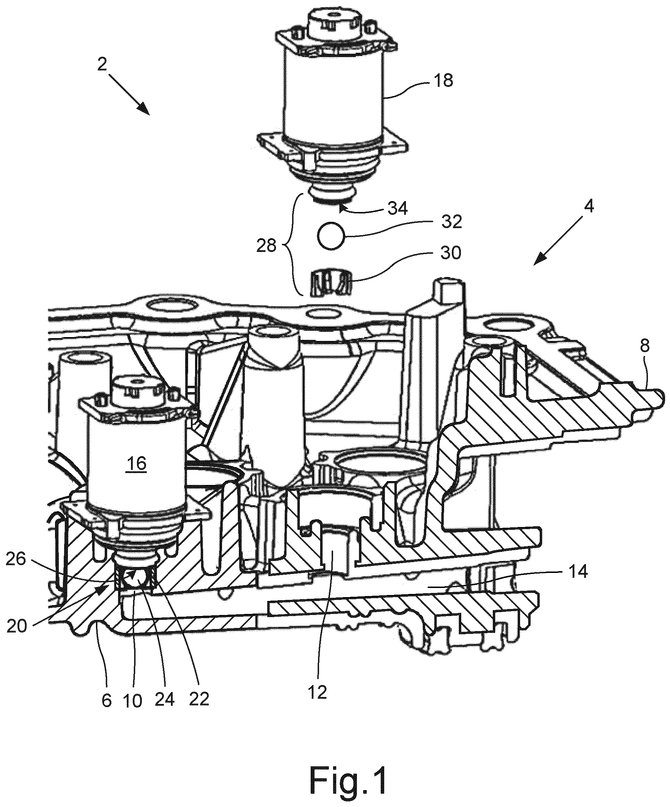

Die in Fig. 1 abgebildete Ventileinrichtung 2 einer pneumatisch betätigbaren Reibungskupplung weist zwei Einlassventile 16, 18 und zwei Druckhalteventile 20, 28 auf, die in einem zweiteiligen Gehäuse 6, 8 eines Steuermoduls 4 angeordnet sind. Die Einlassventile 16, 18 sind als 2/2-Wege-Magnetsitzventile ausgebildet und in jeweils einem von zwei Verbindungskanälen 10, 12 angeordnet, welche parallel zwischen einem hier nicht sichtbaren Eingangskanal, an den eine druckführende Vorratsleitung angeschlossen ist, und einem Ausgangskanal 14, an den ein hier nicht abgebildeter Stellzylinder der Reibungskupplung angeschlossen ist, angeordnet sind. Die Druckhalteventile 20, 28 sind als in Rückströmrichtung schließende ventilfederlose Rückschlagventile ausgebildet und jeweils einem der Einlassventile 16, 18 nachgeschaltet in dem jeweiligen Verbindungskanal 10, 12 angeordnet.

In der Fig. 1 sind das erste Einlassventil 16 sowie das zugeordnete erste Druckhalteventil 20 im eingebauten Zustand und das zweite Einlassventil 18 sowie das zugeordnete zweite Druckhalteventil 28 im nicht eingebauten Zustand oberhalb des Gehäuses 8 dargestellt. Die Einlassventile 16, 18 können baugleich ausgeführt sein oder unterschiedliche Öffnungsquerschnitte aufweisen. Die Druckhalteventile 20, 28 sind baugleich ausgeführt und umfassen jeweils einen Gehäusering 22, 30 mit einem Haltekorb 36, einen Schließkörper 24, 32 und einen Ventilsitz 26, 34.

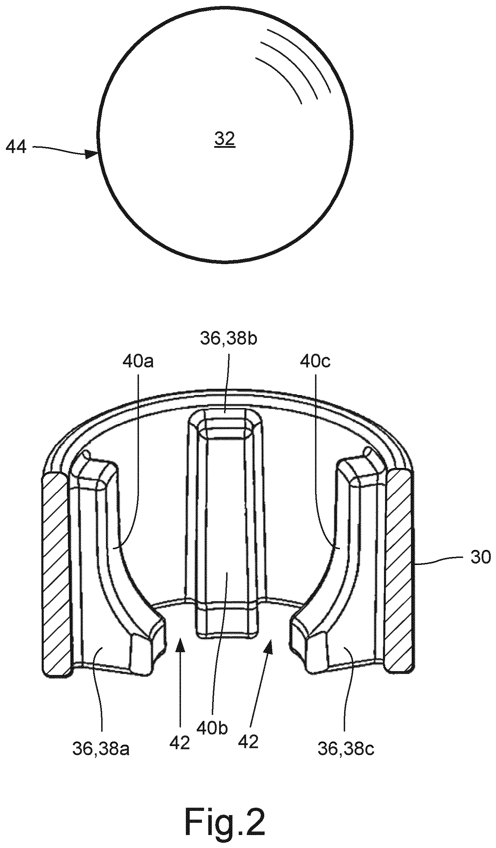

In der Fig. 2 sind beispielhaft der Gehäusering 30 und der Schließkörper 32 des zweiten Druckhalteventils 28 vergrößert dargestellt. Der Schließkörper 32 des Druckhalteventils 28 ist kugelförmig ausgebildet, und der Haltekorb 36 des Gehäuserings 30 besteht aus radial innen an dem Gehäusering 30 umfangsseitig verteilt angeordneten Haltestege 38a, 38b, 38c mit kreissegmentförmigen Innenflächen 40a, 40b, 40c, welche eine kugelsegmentförmige Haltegeometrie des Haltekorbs 36 bilden. Zwischen den Haltestegen 38a, 38b, 38c befinden sich umfangsseitig ausreichend große Aussparungen 42 für die Durchströmung von Druckluft im geöffneten Zustand des Druckhalteventils 28.

Der Schließkörper 32 weist eine federelastische Oberfläche 44 auf. Hierzu kann der Schließkörper 32 vollständig aus einem federelastischen Material, wie Gummi oder Silikonkautschuk, hergestellt sein oder einen Kern aus einem harten Material aufweisen, der mit einem federelastischen Material beschichtet ist. Im eingebauten Zustand sind die Druckhalteventile 20, 28 jeweils nahe an der Austrittsbohrung des zugeordneten Einlassventils 16, 18 angeordnet und nutzen den Rand der betreffenden Austrittsbohrung als Ventilsitz 26, 34.

Zum Ausrücken der Reibungskupplung werden die Einlassventile 16, 18 bestromt und dadurch geöffnet. Dadurch wird der Arbeitsraum des Stellzylinders der Reibungskupplung aus der Vorratsleitung belüftet, wodurch die Reibungskupplung gegen die Rückstellkraft einer Schließ- oder Anpressfeder ausgerückt wird. Zum Einrücken der Reibungskupplung werden die Einlassventile 16, 18 abgeschaltet und dadurch wieder geschlossen sowie hier nicht abgebildete, als 2/2-Wege-Magnetsitzventile ausgebildete Auslassventile bestromt und dadurch geöffnet. Hierdurch wird der Arbeitsraum des Stellzylinders der Reibungskupplung in eine zu einem Entlüftungsausgang führende Entlüftungsleitung entlüftet, wodurch die Reibungskupplung unter der Wirkung der Schließ- oder Anpressfeder wieder eingerückt wird, was dem Fachmann an sich bekannt ist.

Im drucklosen Zustand und bei positivem Druckgradienten, also bei einem höheren Druck in der Vorratsleitung als in dem Arbeitsraum des Stellzylinders, wird der Schließkörper 24, 32 des jeweiligen Druckhalteventils 20, 28 form- und kraftschlüssig in dem Haltekorb 36 des Gehäuserings 22, 30 gehalten. Bei negativem Druckgradienten, also bei einem niedrigeren Druck in der Vorratsleitung als in dem Arbeitsraum des Stellzylinders, der sich im Fall eines störungsbedingten Abfalls des Versorgungsdruckes in der Vorratsleitung einstellt, wird der Schließkörper 24, 32 aus dem Haltekorb 36 herausgedrückt und gegen den jeweiligen Ventilsitz 26, 34 gedrückt. Hierdurch werden die Verbindungskanäle 10, 12 abgesperrt und bei einer ausgerückten Reibungskupplung sowie geschlossenen Einlassventilen 16, 18 eine Entlüftung des Stellzylinders und damit ein unbeabsichtigtes Einrücken der Reibungskupplung verhindert.

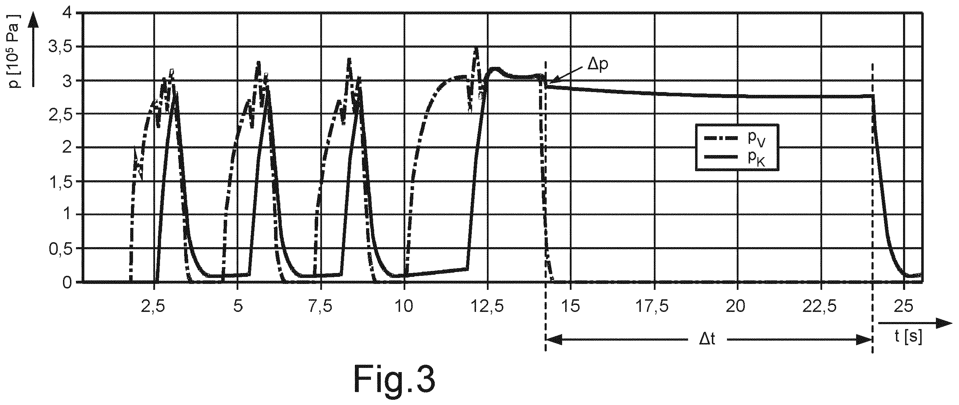

In dem in Fig. 3 dargestellten Diagramm ist die Wirkung der Druckhalteventile 20, 28 anhand der Verläufe des in der Vorratsleitung anliegenden Versorgungsdruckes p_{V} und des in dem Arbeitsraum des Stellzylinders der Reibungskupplung wirksamen Kupplungsdruckes p_{K} über die Zeit t in Sekunden s veranschaulicht. Bis zu dem Zeitpunkt t = 10 s wird der Versorgungsdruck p_{V} dreimal von 0 Pa auf etwa 3 × 10⁵ Pa erhöht und wieder auf 0 Pa abgesenkt. Bei geöffneten Einlassventilen 16, 18 und nicht vorhandenen oder wirksamen Druckhalteventilen 20, 28 folgt der Kupplungsdruck p_{K} dem Versorgungsdruck p_{V} bei der Belüftung des Stellzylinders mit einer Verzögerung von etwa 0,5 s und bei der Entlüftung des Stellzylinders fast verzögerungslos.

Ab dem Zeitpunkt t = 10 s, ab dem der Versorgungsdruck p_{V} erneut von 0 Pa auf etwa 3 × 10⁵ Pa ansteigt, sind die Druckhalteventile 20, 28 vorhanden und wirksam. Nun werden die Einlassventile 16, 18 zum Zeitpunkt t = 11,5 s geöffnet, so dass der Arbeitsraum des Stellzylinders belüftet und die Reibungskupplung ausgerückt wird. Nachdem der Versorgungsdruck p_{V} zum Zeitpunkt t = 14 s störungsbedingt auf 0 Pa abfällt, schließen die Druckhalteventile 20, 28 selbsttätig, so dass der Kupplungsdruck p_{K} schaltzeitbedingt um eine Druckdifferenz Δp von etwa 0,2 × 10⁵ Pa absinkt, dann aber über einen Zeitraum Δt von etwa 10 Sekunden sehr weitgehend konstant gehalten wird. Bei einem Anfahrvorgang mit laufendem Antriebsmotor und eingelegtem Anfahrgang reicht dieser Zeitraum bei weitem aus, um den Anfahrgang auszulegen und/oder den Antriebsmotor abzustellen. In einer derartigen Anfahrsituation kann durch die Wirkung der Druckhalteventile 20, 28 somit ein unkontrolliertes sprunghaftes Anfahren des betreffenden Fahrzeugs sicher verhindert werden.

Fig. 3 zeigt zudem, dass das ventilfederloses Druckhalteventil 20, 28 vorteilhaft durchaus einen gewissen, vergleichsweise geringen Abfall des Kupplungsdrucks pₖ ignoriert, bevor dieses seine Funktion als Rückschlagventil wahrnimmt. Diese Druckdifferenz Δp beträgt im vorgestellten Beispiel zum Zeitpunkt t = 14 s bei einem Ausgangsdruck von 3 × 10⁵ Pa etwa 0,2 × 10⁵ Pa. Ein solcher Druckabfall führt noch nicht zu einem Schließen der Reibungskupplung.

Durch die federelastische Oberfläche 44 schmiegen sich die Schließkörper 24, 32 formschlüssig im geöffneten Zustand der Druckhalteventile 20, 28 an die Innenflächen 40a, 40b, 40c der Haltestege 38a, 38b, 38c der Gehäuseringe 22, 30 und im geschlossenen Zustand der Druckhalteventile 20, 28 an die als Ventilsitze 26, 34 wirksamen Ränder der Austrittsbohrungen der Einlassventile 16, 18 an. Daher können die Gehäuseringe 22, 30 und Haltestege 38a, 38b, 38c der Druckhalteventile 20, 28 relativ einfach gestaltet und kostengünstig hergestellt werden. Zudem ist dadurch auch keine mechanische Feinbearbeitung der Einlassventile 16, 18 im Bereich der Bohrungsränder 26, 34 der Austrittsbohrungen erforderlich. Da die Druckhalteventile 20, 28 nur bei einem sehr selten auftretenden Druckabfall des Versorgungsdruckes p_{V} während des belüfteten Stellzylinders der Reibungskupplung geschlossen werden, ist diese Bauart der Druckhalteventile 20, 28 im Vergleich zu konventionellen Rückschlagventilen weitgehend verschleißfrei und daher sehr funktionssicher.

### Bezugszeichen

- 2: Ventileinrichtung
- 4: Steuermodul
- 6: Erstes Teil des Gehäuses
- 8: Zweites Teil des Gehäuses
- 10: Erster Verbindungskanal
- 12: Zweiter Verbindungskanal
- 14: Ausgangskanal
- 16: Erstes Einlassventil, 2/2-Wege-Magnetsitzventil
- 18: Zweites Einlassventil, 2/2-Wege-Magnetsitzventil
- 20: Erstes Druckhalteventil, Rückschlagventil
- 22: Erster Gehäusering
- 24: Erster Schließkörper, Kugel
- 26: Erster Ventilsitz, Bohrungsrand
- 28: Zweites Druckhalteventil, Rückschlagventil
- 30: Zweiter Gehäusering
- 32: Zweiter Schließkörper, Kugel
- 34: Zweiter Ventilsitz, Bohrungsrand
- 36: Haltekorb
- 38a: Erster Haltesteg
- 38b: Zweiter Haltesteg
- 38c: Dritter Haltesteg
- 40a: Erste Innenfläche
- 40b: Zweite Innenfläche
- 40c: Dritte Innenfläche
- 42: Aussparungen zwischen Haltestegen
- 44: Oberfläche des Schließkörpers
- p: Druck
- p_{K}: Kupplungsdruck
- p_{V}: Versorgungsdruck
- t: Zeit, Zeitpunkt
- Δp: Druckdifferenz
- Δt: Zeitraum

## Patentansprüche

1. Ventileinrichtung (2) für eine pneumatisch betätigbaren Reibungskupplung, die in einem Fahrzeug zwischen einem Antriebsmotor und einem Schaltgetriebe angeordnet sowie mittels Federkraft einrückbar ist, wobei die Ventileinrichtung mindestens ein eingangsseitig an eine druckführende Vorratsleitung und ausgangsseitig an einen Arbeitsraum eines Stellzylinders der Reibungskupplung anschließbares, als ein 2/2-Wege-Magnetsitzventil ausgebildetes Einlassventil (16, 18), ein eingangsseitig an den Arbeitsraum des Stellzylinders und ausgangsseitig an einen Entlüftungsausgang anschließbares, als ein 2/2-Wege-Magnetsitzventil ausgebildetes Auslassventil, sowie ein dem Einlassventil (16, 18) vorgeordnetes oder nachgeordnetes, als ein in Rückströmrichtung schließendes Rückschlagventil ausgebildetes Druckhalteventil (20, 28) aufweist,
**dadurch gekennzeichnet,**
**dass** das Druckhalteventil (20, 28) als ein ventilfederloses Rückschlagventil ausgebildet ist und einen Gehäusering (22, 30) mit einem Haltekorb (36), einen Schließkörper (24, 32) sowie einen Ventilsitz (26, 34) aufweist, wobei der Schließkörper (24, 32) des Druckhalteventils (20, 28) im drucklosen Zustand sowie bei positivem Druckgradienten aus Richtung der Austrittsbohrung des zugeordneten Einlassventils (16, 18) formschlüssig und kraftschlüssig in dem Haltekorb (36) des Gehäuserings (22, 30) haltbar sowie bei negativem Druckgradienten in Richtung der Austrittsbohrung des zugeordneten Einlassventils (16, 18) aus dem Haltekorb (36) heraus hebbar und gegen den Ventilsitz (26, 34) drückbar ist, und dass das Druckhalteventil (20, 28) dem Einlassventil (16, 18) nachgeschaltet sowie nahe an der Austrittsbohrung des Einlassventils (16, 18) angeordnet ist, und dass der Rand der Austrittsbohrung des Einlassventils (16, 18) als Ventilsitz (26, 34) des Druckhalteventils (20, 28) dient und/oder ausgebildet ist.

2. Ventileinrichtung nach Anspruch 1, **dadurch gekennzeichnet, dass** der Haltekorb (36) des Gehäuserings (22, 30) aus radial innen am Gehäusering (22, 30) ausgebildeten, umfangsseitig verteilt angeordneten Haltestege (38a, 38b, 38c) besteht, und dass die Haltestege (38a, 38b, 38c) jeweils eine kreissegmentförmige Innenfläche (40a, 40b, 40c) aufweisen, welche gemeinsam eine kugelsegmentförmige Haltegeometrie des Haltekorbs (36) bilden.

3. Ventileinrichtung nach Anspruch 1 oder 2, **dadurch gekennzeichnet, dass** der Schließkörper (24, 32) des Druckhalteventils (20, 28) kugelförmig ausgebildet ist und eine federelastische Oberfläche (44) aufweist.

4. Ventileinrichtung nach Anspruch 3, **dadurch gekennzeichnet, dass** der Schließkörper (24, 32) vollständig aus einem federelastischen Material besteht.

5. Ventileinrichtung nach Anspruch 3, **dadurch gekennzeichnet, dass** der Schließkörper (24, 32) einen Kern aus einem harten Material aufweist, und dass der Kern mit einem federelastischen Material beschichtet ist.

6. Ventileinrichtung nach Anspruch 3, **dadurch gekennzeichnet, dass** der Schließkörper (24, 32) einen zentrischen Hohlraum aufweisen, welcher kugelschalenförmig von dem federelastischen Material umgeben ist.

7. Ventileinrichtung nach Anspruch 3 bis 6, **dadurch gekennzeichnet, dass** es sich bei dem federelastischen Material des Schließkörpers (24, 32) um Gummi handelt.

8. Ventileinrichtung nach Anspruch 3 bis 6, **dadurch gekennzeichnet, dass** es sich bei dem federelastischen Material des Schließkörpers (24, 32) um Silikonkautschuk handelt.

## Claims

1. Valve device (2) for a pneumatically actuated friction clutch, which is arranged in a vehicle between a drive motor and a gearbox and can be engaged by means of spring force, the valve device comprising at least one inlet valve (16, 18) which is designed as a 2/2-way solenoid seat valve and can be connected on the inlet side to a pressurized supply line and on the outlet side to a working chamber of an actuating cylinder of the friction clutch, an outlet valve which is designed as a 2/2-way solenoid seat valve and can be connected on the inlet side to the working chamber of the actuating cylinder and on the outlet side to a vent outlet, and a pressure-maintaining valve (20, 28) arranged upstream or downstream of the inlet valve (16, 18) and designed as a check valve closing in the reverse flow direction, **characterized in that** the pressure-maintaining valve (20, 28) is designed as a valve springless check valve and comprises a housing ring (22, 30) having a retaining cage (36), a closing body (24, 32) and a valve seat (26, 34), the closing body (24, 32) of the pressure-maintaining valve (20, 28) being able to be held by interlocking and frictional engagement in the retaining cage (36) of the housing ring (22, 30) in the depressurized state and with a positive pressure gradient from the direction of the outlet bore of the associated inlet valve (16, 18) and being able to be lifted out of the retaining cage (36) in the direction of the outlet bore of the associated inlet valve (16, 18) with a negative pressure gradient and be pressed against the valve seat (26, 34), **and in that** the pressure-maintaining valve (20, 28) is arranged downstream of the inlet valve (16, 18) and is arranged close to the outlet bore of the inlet valve (16, 18), **and in that** the edge of the outlet bore of the inlet valve (16, 18) serves and/or is designed as a valve seat (26, 34) of the pressure-maintaining valve (20, 28).

2. Valve device according to claim 1, **characterized in that** the retaining cage (36) of the housing ring (22, 30) consists of retaining ribs (38a, 38b, 38c) formed radially inside the housing ring (22, 30) and arranged distributed around the circumference, **and in that** the retaining ribs (38a, 38b, 38c) each have a circular segment-shaped inner surface (40a, 40b, 40c), which together form a spherical segment-shaped retaining geometry of the retaining cage (36).

3. Valve device according to either claim 1 or claim 2, **characterized in that** the closing body (24, 32) of the pressure-maintaining valve (20, 28) is spherical and has a spring-elastic surface (44).

4. Valve device according to claim 3, **characterized in that** the closing body (24, 32) consists entirely of a spring-elastic material.

5. Valve device according to claim 3, **characterized in that** the closing body (24, 32) has a core made of a hard material, **and in that** the core is coated with a spring-elastic material.

6. Valve device according to claim 3, **characterized in that** the closing body (24, 32) has a central cavity which is surrounded by the spring-elastic material in the shape of a spherical shell.

7. Valve device according to claims 3 to 6, **characterized in that** the spring-elastic material of the closing body (24, 32) is rubber.

8. Valve device according to claims 3 to 6, **characterized in that** the spring-elastic material of the closing body (24, 32) is silicone rubber.

## Revendications

1. Dispositif à soupape (2) pour un embrayage à friction actionnable de manière pneumatique qui est disposé dans un véhicule entre un moteur d'entraînement et une boîte de vitesses et qui peut être embrayé au moyen d'une force de ressort, dans lequel le dispositif à soupape présente au moins une soupape d'admission (16, 18) réalisée sous forme de soupape électromagnétique à siège à 2/2 voies et pouvant être raccordée côté entrée à une conduite de réserve conduisant la pression et pouvant être raccordée côté sortie à un espace de travail d'un cylindre positionneur de l'embrayage à friction, une soupape d'échappement réalisée sous forme de soupape électromagnétique à siège à 2/2 voies et pouvant être raccordée côté entrée à l'espace de travail du cylindre positionneur et pouvant être raccordée côté sortie à une sortie d'évacuation d'air, ainsi qu'une soupape de maintien de pression (20, 28) réalisée sous forme de soupape antiretour se fermant dans le sens de reflux et placée en amont ou en aval de la soupape d'admission (16, 18), **caractérisé en ce que** la soupape de maintien de pression (20, 28) est réalisée sous forme de soupape antiretour sans ressort de soupape et présente une bague de boîtier (22, 30) comportant un panier de maintien (36), un corps de fermeture (24, 32) ainsi qu'un siège de soupape (26, 34), dans lequel le corps de fermeture (24, 32) de la soupape de maintien de pression (20, 28) peut être maintenu par complémentarité de forme et par adhérence dans le panier de maintien (36) de la bague de boîtier (22, 30) à l'état hors pression ainsi qu'en cas de gradient de pression positif en direction de l'alésage de sortie de la soupape d'admission (16, 18) associée et peut être soulevé hors du panier de maintien (36) en cas de gradient de pression négatif en direction de l'alésage de sortie de la soupape d'admission (16, 18) associée, et peut être pressé contre le siège de soupape (26, 34), **et en ce que** la soupape de maintien de pression (20, 28) est montée en aval de la soupape d'admission (16, 18) et est disposée à proximité de l'alésage de sortie de la soupape d'admission (16, 18), **et en ce que** le bord de l'alésage de sortie de la soupape d'admission (16, 18) sert de siège de soupape (26, 34) à la soupape de maintien de pression (20, 28) et/ou est réalisé sous forme de siège de soupape.

2. Dispositif à soupape selon la revendication 1, **caractérisé en ce que** le panier de maintien (36) de la bague de boîtier (22, 30) se compose de nervures de maintien (38a, 38b, 38c) réalisées radialement à l'intérieur sur la bague de boîtier (22, 30) et disposées de manière à être réparties côté circonférence, **et en ce que** les nervures de maintien (38a, 38b, 38c) présentent respectivement une surface intérieure (40a, 40b, 40c) en forme de segment circulaire qui forment conjointement une géométrie de maintien en forme de segment sphérique du panier de maintien (36).

3. Dispositif à soupape selon la revendication 1 ou 2, **caractérisé en ce que** le corps de fermeture (24, 32) de la soupape de maintien de pression (20, 28) est réalisé en forme sphérique et présente une surface (44) élastique.

4. Dispositif à soupape selon la revendication 3, **caractérisé en ce que** le corps de fermeture (24, 32) est entièrement constitué d'un matériau élastique.

5. Dispositif à soupape selon la revendication 3, **caractérisé en ce que** le corps de fermeture (24, 32) présente un noyau en un matériau dur, **et en ce que** le noyau est revêtu d'un matériau élastique.

6. Dispositif à soupape selon la revendication 3, **caractérisé en ce que** le corps de fermeture (24, 32) présente une cavité centrale qui est entourée en forme de cuvette par le matériau élastique.

7. Dispositif à soupape selon les revendications 3 à 6,
**caractérisé en ce que** le matériau élastique du corps de fermeture (24, 32) est du caoutchouc.

8. Dispositif à soupape selon les revendications 3 à 6,
**caractérisé en ce que** le matériau élastique du corps de fermeture (24, 32) est du caoutchouc de silicone.
